# DEMANDE DE BREVET EUROPEEN

(11) **EP 3 246 622 A1**
(43) Date de publication de la demande: **22.11.2017**
(21) Numéro de dépôt: 17170053.7
(22) Date de dépôt: 09.05.2017
(51) Int. Cl.: F21V 8/00, B60Q 3/62

(54) **SYSTEMES D'ECLAIRAGE D'AMBIANCE POUR VEHICULES**

(30) Priorité: 19.05.2016 FR 1654477
(71) Demandeur: PSA Automobiles SA, 78300 Poissy (FR)
(72) Inventeur: NORAIS, Marc, 78500 SARTROUVILLE (FR); SCHNURIGER, Damien, 91300 MASSY (FR)

(57) **Abrégé**

Un système d'éclairage intérieur d'ambiance comprenant une source de lumière (**1, 2**) et un guide de lumière (**4**) comprenant un tronc (**40**) et une branche (**41, 42**) issue du tronc, la source de lumière étant disposée en regard de l'extrémité libre de la branche, cette branche étant configurée pour guider un premier rayon de lumière émis par la source de lumière vers l'intérieur du tronc du guide de lumière pour se propager dans un premier sens dans le tronc du guide de lumière, et un deuxième rayon de lumière émis par la source de lumière vers l'intérieur du tronc du guide de lumière pour se propager dans un deuxième sens, opposé au premier sens, dans le tronc du guide de lumière.

## Description

La présente invention concerne les systèmes d'éclairage intérieur, et plus particulièrement les systèmes d'éclairage d'ambiance pour véhicule, notamment automobile.

L'habitacle d'un véhicule automobile doit comporter des moyens d'éclairage intérieur, qui permettent de réaliser différentes fonctions.

En particulier, il est nécessaire de disposer de moyens d'éclairage ayant une intensité suffisante pour permettre au conducteur du véhicule ou à des passagers d'examiner avec attention des objets ou des documents, et notamment de lire des documents, plus particulièrement pendant des arrêts du véhicule automobile. Un tel éclairage est généralement désigné comme éclairage de lecture à l'intérieur du véhicule automobile.

Il est également nécessaire de disposer de moyens permettant au conducteur ou aux passagers du véhicule automobile d'accéder facilement au poste de conduite ou à un siège de passager, après ouverture d'une porte du véhicule. De tels moyens permettent habituellement d'éclairer le côté latéral du véhicule automobile, par lequel le conducteur ou le passager pénètre dans le véhicule automobile, en particulier au niveau du plancher de l'habitacle, ainsi qu'au moins une partie du siège qui doit être occupé par le conducteur ou le passager. Un tel moyen d'éclairage est généralement appelé éclairage d'accueil.

L'éclairage intérieur du véhicule automobile comporte également un éclairage d'ambiance, diffusant une lumière à faible intensité, pratiquement dans toute la surface de l'habitacle. L'éclairage d'ambiance est conventionnellement tamisé.

Un éclairage d'ambiance est généralement obtenu au moyen d'une source de lumière, d'un guide de lumière (par exemple fibre optique), et d'un diffuseur. De tels produits sont commercialisés, pour la personnalisation des véhicules, par exemple sous l'appellation LEDambient® (Osram).

L'éclairage d'ambiance améliore le confort du conducteur et des passagers, et participe à l'esthétique et au charme du véhicule.

Dans les dispositifs d'éclairage d'ambiance de type bande lumineuse, les rayons provenant d'une source de lumière placée à une extrémité du guide de lumière sont acheminés vers l'autre extrémité du guide de lumière.

De tels systèmes sont par exemple utilisés pour signaler les bords d'un objet ou les lignes d'une certaine forme, comme illustré par exemple dans le document US 6854869.

Le conducteur peut choisir la couleur et l'intensité de l'éclairage d'ambiance.

L'éclairage d'ambiance s'enclenche par exemple dès que l'éclairage extérieur du véhicule est allumé, ou en fonction de la mesure effectuée par un capteur de luminosité, ou bien encore lors de l'ouverture de porte.

La disposition d'une seule source de lumière à une extrémité du guide de lumière est problématique pour plusieurs raisons, dont notamment la perte du flux lumineux le long du guide. Cette perte de flux lumineux, fonction de la longueur du guide de lumière, est surtout remarquable du côté opposé à la source.

En outre, la disposition de la source de lumière à une extrémité du guide de lumière est, dans certaines situations, difficile à mettre en oeuvre, faute d'espace disponible pour recevoir une telle source.

Par ailleurs, la disposition de la source de lumière en une extrémité du guide de lumière rend difficile la réalisation, au moyen de ce guide, d'une ligne fermée de lumière.

Le document DE102012222684 enseigne un dispositif d'éclairage pour un véhicule automobile comprenant un guide de lumière pour un guidage totalement réfléchissant de la lumière de deux sources lumineuses, le long d'un axe de diffusion. Les deux sources lumineuses sont placées, respectivement, aux deux extrémités de ce guide de lumière de forme linéaire.

Un objectif est de fournir une solution technique palliant les inconvénients de l'art antérieur.

Un autre objectif est de permettre l'intégration d'un système d'éclairage d'ambiance dans l'habitable d'un véhicule automobile, avec un minimum d'encombrement.

Un autre objectif de proposer un système d'éclairage d'ambiance facilitant la réalisation de lignes fermées de lumière.

A ces fins, il est proposé, selon un premier aspect, un système d'éclairage intérieur d'ambiance, comprenant une source de lumière et un guide de lumière, ce guide de lumière comprenant un tronc et une branche issue du tronc, la source de lumière étant disposée en regard de l'extrémité libre de la branche, cette branche étant configurée pour guider
- un premier rayon de lumière émis par la source de lumière vers l'intérieur du tronc du guide de lumière pour se propager dans un premier sens dans le tronc du guide de lumière ;
- un deuxième rayon de lumière émis par la source de lumière vers l'intérieur du tronc du guide de lumière pour se propager dans un deuxième sens, opposé au premier sens, dans le tronc du guide de lumière.

Ce système présente, selon diverses réalisations, les caractéristiques suivantes, le cas échéant combinées :
- la branche est située sensiblement à mi longueur du tronc du guide de lumière ;
- la source de lumière comprend une première source de lumière configurée pour émettre le premier rayon de lumière, et une deuxième source de lumière configurée pour émettre le deuxième rayon de lumière ;
- la branche comprend une première branche configurée pour guider le premier rayon de lumière émis par la première source de lumière vers l'intérieur du tronc du guide de lumière pour se propager dans le premier sens dans le tronc du guide de lumière, et une deuxième branche configurée pour guider le deuxième rayon de lumière émis par la deuxième source de lumière vers l'intérieur du tronc du guide de lumière pour se propager dans le deuxième sens, opposé au premier sens, dans le tronc du guide de lumière ;
- la première branche et la deuxième branche ont chacune un profil en forme d'arc, par exemple en arc de cercle ;
- la première branche et la deuxième branche ont chacune un profil en forme de segment rectiligne ;
- la première source de lumière et la deuxième source de lumière sont quasi monochromatiques ;
- le système comprend un diffuseur configuré pour recevoir le guide de lumière, ce diffuseur comprenant une zone réfléchissante ;
- le tronc du guide de lumière comprend une pluralité d'irrégularités de surface, agencées pour projeter un rayon de lumière se propageant dans le tronc sur la zone réfléchissante du diffuseur.

L'invention se rapporte, selon un deuxième aspect, à un véhicule, notamment automobile, comprenant un système d'éclairage tel que présenté ci-dessus.

D'autres caractéristiques et avantages de l'invention apparaîtront plus clairement et de manière concrète à la lecture de la description ci-après de modes de réalisation, faite ci-après en référence aux dessins annexés dans lesquels :
- la figure 1 illustre schématiquement un système d'éclairage d'ambiance ;
- les figures 2-4 illustrent schématiquement des variantes de certains éléments du dispositif d'éclairage d'ambiance ;
- les figures 5 et 6 illustrent respectivement une vue en perspective et une vue en coupe transversale d'un diffuseur comprenant un guide de lumière selon divers modes de réalisation.

Les figures sont schématiques et ne respectent pas nécessairement l'échelle, pour en faciliter la lecture.

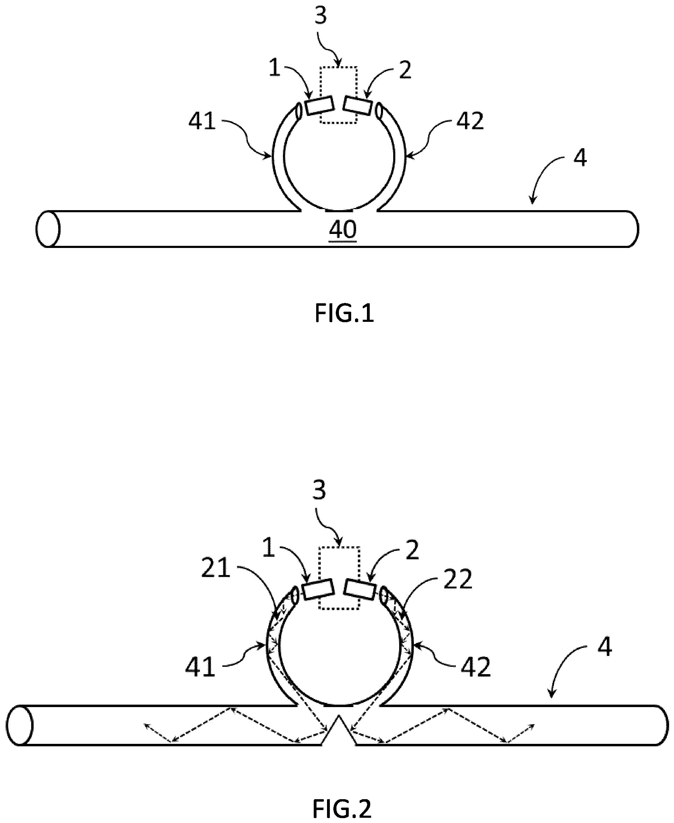

En se référant à la figure 1, le système d'éclairage comprend deux sources de lumière **1**, **2**. De préférence, ces deux sources de lumière **1**, **2** émettent une lumière directive et le faisceau lumineux émis est destiné à éclairer une surface qui lui est perpendiculaire. En variante, la lumière émise par au moins une des deux sources de lumière **1**, **2** est rendue directive.

Dans certains modes de réalisation, les deux sources de lumière **1**, **2** sont identiques. A titre d'exemple, les sources de lumière **1**, **2** sont des diodes électroluminescentes (LED). Dans des modes de réalisation particuliers, les sources de lumière **1**, **2** sont des diodes laser.

Dans certaines mises en oeuvre, les sources de lumière **1**, **2** sont deux diodes électroluminescentes blanches. En variante, les sources de lumière **1** et **2** sont deux diodes électroluminescentes quasi monochromatiques, produisant chacune un faisceau de lumière de même couleur ou non, par exemple bleu, rouge, vert ou toute combinaison de ces couleurs.

Les sources de lumière **1**, **2** sont gérées par un dispositif électronique **3**, qui assure l'alimentation électrique et la commande de l'état ouvert/fermé des sources de lumière **1**, **2**.

Dans certains modes de réalisation, le dispositif électronique **3** permet de faire varier l'intensité lumineuse émise par la ou les deux sources de lumière **1**, **2**.

Dans certains modes de réalisation, les deux sources de lumière **1**, **2** sont commandées d'une manière synchrone par le dispositif électronique **3**.

Le système d'éclairage comprend, en outre, un guide de lumière **4**, de type linéaire rectiligne, ou bien courbe. Le guide de lumière peut être ouvert ou fermé, par exemple en boucle.

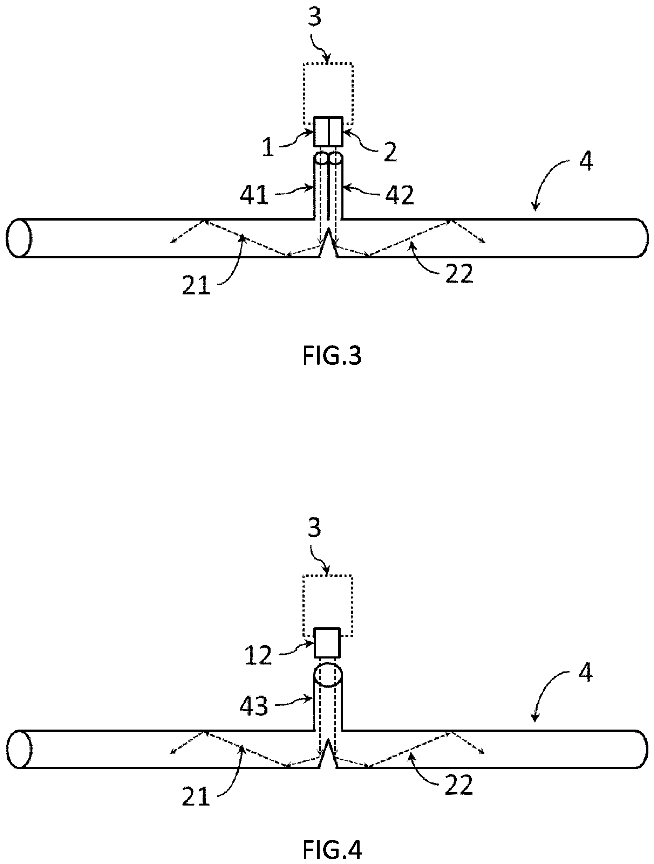

Dans les modes de réalisation des figures 1 à 3, le guide de lumière **4** comprend un tronc **40** et deux branches **41**, **42**. Dans le mode de réalisation de la figure 4, les branches **41**, **42** des figures 1-3 sont comprises dans une seule branche **43**.

Le guide de lumière **4** est avantageusement réalisé par moulage en une seule pièce. Les branches **41**, **42** sont ainsi formées d'une seule pièce continue et homogène avec le tronc **40** du guide de lumière **4**.

Le tronc **40**, ainsi que les branches **41**, **42**, peuvent avoir une section transversale circulaire, ovale, carrée, rectangulaire.

Le guide de lumière **4** est en matériau transparent.

Dans certains modes de réalisation, le guide de lumière **4** est en verre ou en une matière polymère transparente.

Le guide de lumière **4** est, dans une mise en oeuvre, en polyméthacrylate de méthyle, dont l'indice de réfraction est de l'ordre de 1.49.

Dans une autre mise en oeuvre, le guide de lumière est réalisé en polycarbonate, dont l'indice de réfraction est de l'ordre de 1.59.

Le guide de lumière **4** est pourvu de reliefs, tels que par exemple des godrons, permettant de disperser la lumière à l'extérieur du guide.

Les branches **41**, **42** convergent en même un point du tronc **40** du guide de lumière **4**. En d'autres termes, les branches **41**, **42** sont issues d'un même point du tronc **40**. De préférence, notamment lorsque le tronc **40** forme une barre rectiligne, ce point se situe sensiblement à mi longueur du tronc **40**, les branches **41**, **42** se rencontrant en un point du tronc **40** qui est sensiblement équidistant des extrémités de ce tronc **40**.

Dans un mode de réalisation, lorsque le tronc **40** est de grande longueur, plusieurs branches **41**, **42** sont placées le long de ce tronc **40**, avantageusement à distance des extrémités du tronc **40**.

Dans les modes de réalisation des figures 1 à 3, une première source de lumière **1** est disposée en regard de l'extrémité libre de la branche **41** du guide de lumière **4**. De même, une seconde source de lumière **2** est disposée en regard de l'extrémité libre de la branche **42** du guide de lumière **4**. Les sources de lumière **1**, **2** sont agencées de sorte que la face de l'extrémité libre de la branche **41**, **42** est sensiblement perpendiculaire à la direction des rayons lumineux provenant des sources de lumière **1**, **2**.

Dans certains modes de réalisation, les sources de lumière **1**, **2** présentent un axe d'émission sensiblement perpendiculaire à la face de l'extrémité libre de la branche **41**, **42** du guide de lumière **4**, de sorte que la lumière émise pénètre dans la branche **41**, **42** par cette extrémité.

En se référant maintenant à la figure 2, les deux branches **41**, **42** converge en un point du tronc **40** du guide de lumière **4** de sorte à guider la lumière provenant, respectivement, des sources de lumière **1**, **2** en sens opposés dans le tronc **40**. Ainsi, les branches **41**, **42** sont disposées pour guider, par réflexions internes, les rayons de lumière émis par les sources de lumière **1**, **2** vers l'intérieur du tronc **40** du guide de lumière.

En effet, lorsque les sources de lumière **1**, **2** sont allumées, les rayons de lumière émis, matérialisés par les flèches **21**, **22**, se propagent dans les branches **41**, **42** depuis leurs extrémités libres jusqu'à l'intérieur du tronc **40** du guide de lumière **4**.

Un évidement en forme de V inversé, agencé dans le tronc **40** en regard du point de convergence des deux branches **41**, **42**, permet de réfléchir :
- les rayons de lumière provenant de la branche **41** dans un premier sens à l'intérieur du tronc **40** ; et
- les rayons de lumière provenant de la tranche **42** dans un deuxième sens, opposé au premier au sens, à l'intérieur du tronc **40**.

Le principe de la division d'un flux lumineux en deux, dans un guide de lumière, pour former deux flux partant dans deux directions opposées est connu en soit, et par exemple présenté dans les documents FR 2828267, EP 1867913, EP 2955062.

Les rayons de lumière émis par les sources de lumière **1**, **2** sont, ainsi, acheminés (ou guidés) au moins en partie vers l'intérieur du tronc **40** en son milieu et se propagent par réflexions internes, de part et d'autre de ce milieu, dans le tronc **40**. Il en résulte, avantageusement, une perte du flux lumineux aux extrémités du tronc **40** moindre que s'il était une source de lumière à une extrémité du tronc **40**.

Il est à noter que les branches **41**, **42** peuvent avoir des profils en frome d'arc, par exemple arc de cercle (figure 1 et 2) ou en forme de segments rectilignes tel qu'il est illustré sur la figure 3.

Dans un mode de réalisation illustré sur la figure 4, les branches **41**, **42** des figures 1-3 sont comprises dans une seule branche **43** située sensiblement au milieu du tronc **40** du guide de lumière, et les deux sources de lumières **1**, **2** sont comprises dans une seule source de lumière **12**, disposée en regard de l'extrémité libre de la branche **43**. L'évidement en forme de V inversé effectué dans le tronc **40** en regard de la branche **43** permet de répartir les rayons lumineux acheminés par cette branche **43** dans les deux parties du tronc **40**, de part et d'autre du point de départ de la branche **43**.

La branche **43** est configurée pour guider :
- un premier rayon de lumière **21** émis par la source de lumière **12** vers l'intérieur du tronc **40** du guide de lumière **4**, pour se propager dans un premier sens à l'intérieur du tronc **40** ;
- un deuxième rayon de lumière **22** émis par la source de lumière **12** vers l'intérieur du tronc **40** du guide de lumière **4**, pour se propager dans un deuxième sens, opposé au premier sens, dans le tronc **40**.

Dans un mode de réalisation, un cache est prévu pour recouvrir le dispositif électronique **3**. Ce cache permet d'isoler thermiquement le circuit électronique **3** ainsi que les sources de lumière **1**, **2** (ou **12**) du guide de lumière **4**. Ce cache permet de masquer le dispositif électronique, pour des raisons d'esthétique et de protection contre les chocs.

Dans un mode de réalisation, ce cache est, en outre, prévu pour orienter la lumière émise par la source de lumière **1**, **2** (ou **12**) vers l'extrémité de la branche **41**, **42** correspondante (ou **43**) et limiter ainsi la dispersion de la lumière à ce niveau.

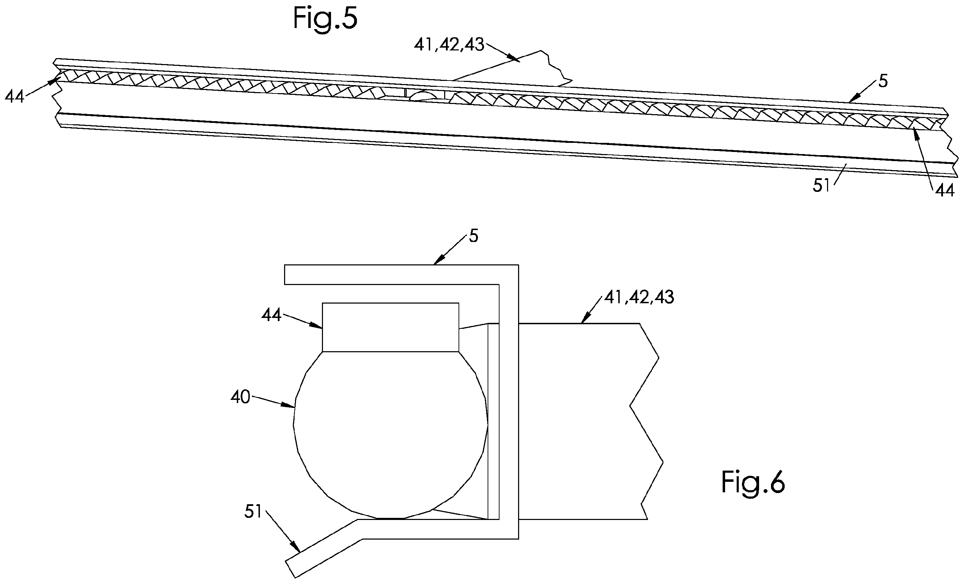

Dans un mode de réalisation illustré sur les figures 5-6, un diffuseur **5** est configuré pour recevoir le guide de lumière **4**. Dans ce cas, le guide de lumière **4** comprend, de préférence, une pluralité d'irrégularité **44** de surface (des altérations superficielles, telles que des modifications locales du relief) à l'effet de concentrer et projeter les rayons de lumières **21**, **22** se propageant dans le tronc **40** sur une zone **51** réfléchissante du diffuseur **5**.

Grâce à la disposition décrite ci-dessus des sources de lumière par rapport au guide de lumière **4**, le dispositif électronique **3** et ces sources de lumière sont, avantageusement, maintenues distantes du guide de lumière **4**, de sorte qu'ils puissent dissiper l'énergie thermique qu'elles émettent loin du guide de lumière **4**.

Avantageusement, la disposition décrite ci-dessus des sources de lumière permet l'obtention d'une ligne de lumière fermée, sans qu'il y ait une discontinuité qui serait requise lorsque la ou les sources de lumière sont disposées à une extrémité du tronc **40**.

Avantageusement, la disposition des (ou de la) source(s) de lumière à mi longueur du guide de lumière **4** rend possible l'obtention d'une ligne de lumière continue et homogène sur toute la longueur du guide. Cette disposition permet d'obtenir une photométrie sensiblement homogène et uniforme le long du guide de lumière.

Le système d'éclairage présenté ci-dessus peut, bien entendu, être utilisé pour éclairer au moins une partie d'un environnement intérieur tel que celui d'un véhicule automobile, ou au moins une partie d'un environnement extérieur en traçant/signalant, par exemple, les bords extérieurs d'un chemin, des feux, d'un wagon, ou plus généralement d'un objet.

Le système d'éclairage d'ambiance qui vient d'être décrit présente de nombreux autres avantages. Il peut être implémenté avec un minimum d'encombrement et permet d'augmenter la longueur effective ou utile du guide de lumière.

Le système d'éclairage qui a été décrit trouve application avantageuse dans l'éclairage d'ambiance de véhicules, notamment automobile. Dans d'autres applications envisageables, le système assure l'éclairage ou la signalisation pour les véhicules, notamment les véhicules automobiles, par exemple les plafonniers, l'éclairage de console, une liseuse, ou bien encore l'éclairage externe, tel que feu ou projecteurs.

## Revendications

1. Système d'éclairage intérieur d'ambiance, comprenant des première et deuxième sources de lumière (**1**, **2**) aptes à émettre respectivement des premier et deuxième rayons de lumière (**21**, **22**) et un guide de lumière (**4**), comprenant un tronc (**40**), une première branche (**41**), issue du tronc (**40**) configurée pour guider le premier rayon de lumière (**21**) émis par la première source de lumière (**1**) disposée en regard de l'extrémité libre de la première branche (**41**), vers l'intérieur du tronc (**40**) du guide de lumière (**4**) pour se propager dans un premier sens dans le tronc (**40**) du guide de lumière (**4**), et une deuxième branche (**42**), issue du tronc (40), configurée pour guider le deuxième rayon de lumière (**22**) émis par la deuxième source de lumière (**2**) disposée en regard de l'extrémité libre de la deuxième branche (**42**), vers l'intérieur du tronc (**40**) du guide de lumière (**4**) pour se propager dans un deuxième sens, opposé au premier sens, dans le tronc (**40**) du guide de lumière (**4**) **caractérisé en ce que** la première branche (**41**) et la deuxième branche (**42**) ont chacune un profil en forme d'arc.

2. Système selon la revendication précédente, **caractérisé en ce que** les première et deuxième branche (**41**, **42**) sont situées sensiblement à mi longueur du tronc (**40**) du guide de lumière (**4**).

3. Système selon l'une quelconque des revendications 1 à 2, **caractérisé en ce que** la première source de lumière (**1**) et la deuxième source de lumière (**2**) sont quasi monochromatiques.

4. Système selon l'une quelconque des revendications précédentes, **caractérisé en ce qu'**il comprend en outre un diffuseur (**5**) configuré pour recevoir le guide de lumière (**4**), ce diffuseur (**5**) comprenant une zone (**51**) réfléchissante.

5. Système selon la revendication précédente, **caractérisé en ce que** le tronc (**40**) du guide de lumière (**4**) comprend une pluralité d'irrégularités de surface (**44**), agencées pour projeter un rayon de lumière (**21**, **22**) se propageant dans le tronc (**40**) sur la zone (**51**) réfléchissante du diffuseur (**5**).

6. Véhicule comprenant un système d'éclairage intérieur d'ambiance selon l'une quelconque des revendications 1 à 5.
